Europäisches Patentamt

European Patent Office

Office européen des brevets

(11) Publication number: **0 232 710**
**A1**

## (12) EUROPEAN PATENT APPLICATION

(21) Application number: **87100144.2**

(22) Date of filing: **08.01.87**

(51) Int. Cl.⁴: **G01F 5/00** , **G01F 1/68**

(30) Priority: **08.01.86 JP 576/86**

(43) Date of publication of application:
**19.08.87 Bulletin 87/34**

(84) Designated Contracting States:
**DE FR**

(71) Applicant: **HITACHI, LTD.**
**6, Kanda Surugadai 4-chome**
**Chiyoda-ku Tokyo 101(JP)**

(72) Inventor: **Ohki, Hiroshi**
**8-1, Migimomi**
**Tsuchiura-shi Ibaraki-ken(JP)**
Inventor: **Ishizawa, Shingo**
**22-12-19, Hakusan**
**Abiko-shi Chiba-ken(JP)**
Inventor: **Uchiyama, Kyohichi**
**1-12-9, Kaga**
**Kashiwa-shi Chiba-ken(JP)**
Inventor: **Tokuda, Hiroatu**
**16-10-13, Aoba-cho**
**Katsuta-shi Ibaraki-ken(JP)**
Inventor: **Takahashi, Minoru**
**1367-4, Tabiko**
**Katsuta-shi Ibaraki-ken(JP)**

(74) Representative: **Patentanwälte Beetz sen. -**
**Beetz jun. Timpe - Siegfried -**
**Schmitt-Fumian**
**Steinsdorfstrasse 10**
**D-8000 München 22(DE)**

(54) **Flow rate detector.**

(57) An object of the present invention is to obtain a flow rate detector capable of measuring a flow rate of the air sucked into an internal combustion engine, with a low pressure loss and a high measurement accuracy. In this air flow rate detector, a flow rate detecting means consisting of a hot wire element - (4) is provided in a bypass (3) branching from a main air passage (2a, 2b), and a confluence port - (3c) for joining the air current in the bypass passage (3) to the main air current in a main air passage (2a, 2b) is formed so as to be opened in the axial direction of the main air passage (2a, 2b).

*FIG. 1*

## FLOW RATE DETECTOR

### BACKGROUND OF THE INVENTION:

This invention relates to a flow rate detector suitably used to measure the flow rate of the air sucked into an internal combustion engine, and more particularly to a hot-wire air flow meter.

In an electronically controlled fuel injector for an internal combustion engine, it is necessary that the flow rate of the suction air into the engine be determined. There are various types of measuring systems used for this purpose. Especially, a hot wire flow meter has generally a high response speed, and is capable of measuring the mass flow rate of the air. Accordingly, this flow meter does not require the correction of the air pressure, so that it is widely utilized. The known examples of the flow meter of this kind include, for example, the flow meters disclosed in USP 2042938 and USP 3824996.

The so-called bypass type hot-wire flow meter has an effect in smoothing the suction pulsation of an internal combustion engine, and a high backfire resistance. The examples of this type of hot-wire flow meter include the flow meters disclosed in USP 4366704 and USP 4472965.

The flow meter of USP 4366704 will now be described. The air current from an air cleaner passes through an air flow meter, and is supplied to a suction pipe in an engine. A part of the air current flowing into the air flow meter branches and flows into a bypass passage, while the remaining part of the air current flows into a main air passage. The bypass passage is provided therein with a hot-wire flow rate detecting element, and the velocity of flow of the air flowing in the bypass passage is detected on the basis of an output from this element, the velocity of flow of this air current and the flow rate thereof corresponding to each other with a ratio of 1:1. If the relation between an output signal from the flow rate detecting element and a flow rate of the air is calibrated in advance, the flow rate of the air supplied to the suction pipe in the engine can be determined on the basis of an output signal from the flow rate detecting element. The air current flowing in the bypass passage returns at the outlet thereof to the main air passage to join the main air current flowing therein. After the bypass current and main current have been mixed, the resultant air current restores its original pressure via a divergent pipe.

In this conventional example, the air current flowing in the bypass passage collides when it is returned at the outlet thereof to the main air passage, with the main air current therein to cause the pressure loss to increase. When a suction system in an internal combustion engine is designed, a permissible level of a pressure loss occurring at an actual maximum flow rate is usually set on an air flow meter. Accordingly, when a pressure loss is large, a maximum measurable flow rate decreases even if the passage diameter of the air flow meter is unchanged, so that the range of measurement of flow rate is narrowed. Conversely, when the passage diameter of the air flow meter is increased so as to suppress a pressure loss within a permissible level for the purpose of securing a predetermined range of measurement, the overall velocity of flow of the air, i.e., the velocity of flow of the air in the bypass passage becomes low to cause the measurement accuracy to decrease.

### SUMMARY OF THE INVENTION:

An object of the present invention is to obtain a bypass type flow rate detector having a small pressure loss.

Another object of the present invention is to obtain a bypass type flow rate detector capable of improving the measurement accuracy thereof.

To achieve these objects, the present invention provides a bypass type flow rate detector, wherein a flow rate detecting means is provided in a bypass passage branching from a main air passage, to detect the flow rate of the air flowing in the main air passage, characterized in that the flow rate detector includes a confluence port formed so as to be opened in the axial direction of the main air passage and join the air current in the bypass passage to the one in the main air passage.

The above and other objects, features and advantages of the present invention will become apparent from the following description of the preferred embodiment taken in conjunction with the accompanying drawings.

### BRIEF DESCRIPTION OF THE DRAWINGS:

Fig. 1 is a longitudinal section of an embodiment of the flow rate detector according to the present invention;

Fig. 2 is a graph showing the air flow rate in a divergent pipe and a pressure loss; and

Fig. 3 is a graph showing the relation between the flow rate of the air flowing in the bypass passage and an output voltage.

DESCRIPTION OF THE PREFERRED EMBODIMENT:

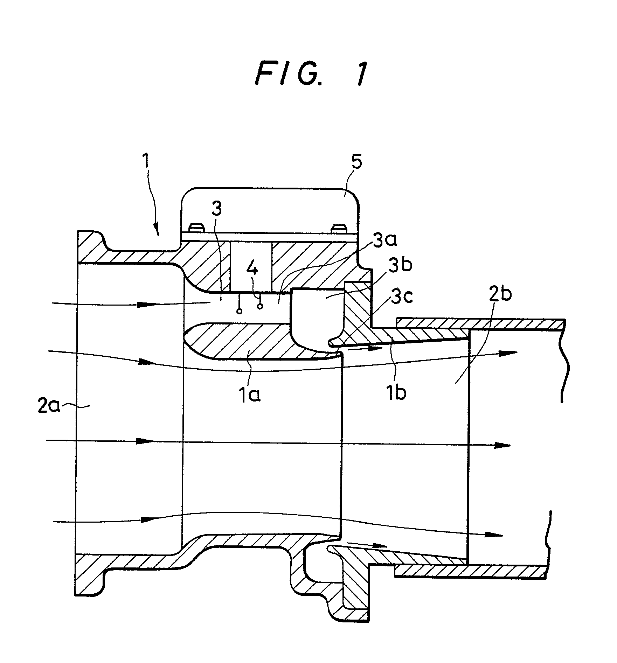

An embodiment of the present invention will now be described with reference to Figs. 1-3.

Referring to Fig. 1, a flow rate detector 1 consists of main air passage members 2a, 2b, a bypass passage 3, a flow rate detecting means, for example, a hot-wire element 4, and a hot wire driving circuit 5. The main air passage member 2b is formed of a divergent pipe in which a predetermined pressure of the main air current is restored. The bypass passage 3 consists of a flow rate detecting passage member 3a, an annular passage member 3b and a confluence port 3c.

An air filter is usually provided on the upstream side of the flow rate detector 1, and an air current which has been cleaned by this air filter flows into the detector 1. The air current entering the detector 1 branches and flows into the main air passage member 2a and bypass passage 3. Owing to the operation of the hot wire driving circuit 5 which is adapted to control the hot element 4 provided in the flow rate detecting passage member 3a of the bypass passage 3, an output signal the level of which corresponds to the velocity of flow of the air current flowing in the bypass passage is obtained. On the basis of this output signal, the overall mass flow rate of the air flowing in the flow rate detector 1 can be obtained. The air current which has passed through the flow rate detecting passage member 3a of the bypass passage 3 is guided to the annular passage member 3b and distributed uniformly to all parts of the interior thereof. This air current is then guided axially from the confluence port 3c to the interior of the main air passage member 2b to join the main air current.

The confluence port 3c is opened in the form of a narrow annular bore extending in the circumferential direction of the main air passage members, and it is formed so that the air current therein flows out in parallel with the air current in the main air passage member 2b. Namely, the confluence port 3c is formed by extending a downstream end of a venturi portion 1a in the axial direction, and fitting a downstream end portion of this extension into an opposed end portion of a flow rate detector body 1b so that an axially-opened radial clearance (confluence port 3c) is formed between the outer circumferential surface of this end portion of the extension and the opposed surface of the mentioned end portion of the detector body 1b. In this embodiment, the confluence port 3c is formed so as to extend over the whole length of the outer circumferential portion of the main air passage. The effective axial length of the overlapping portions of the venturi portion 1a and detector body 1b which correspond to the confluence port 3c is at least 1-2 mm. In view of the convenience of forming and the strength of the overlapping end section, which defines the confluence port 3c, of the venturi portion, it is advantageous that the thickness of this end section be set to the lowest possible level because, if this thickness is set in this manner, the strength of an eddy current occurring at the overlapping end section of the venturi portion as well as a pressure loss can be minimized. The angle of divergence of the main air passage member 2b should be set to not more than 10° in terms of semivertical angle. The divergent pipe has the functions of restoring a predetermined pressure owing to the so-called diffuser's effect thereof. When the angle of divergence of the divergent pipe is too large, the pressure restoration effect thereof decreases. It is said that a specially effective angle of divergence of an ordinary conical diffuser is 3°-4° in terms of semi-vertical angle. Since the air current ejected from the confluence port 3c of the bypass passage 3 flows along the inner surface of the divergent pipe, a boundary layer-controlling effect occurs. Therefore, the restoration of a predetermined pressure can be effected without causing the separation of the air current even when the angle of divergence is up to around 7°-10° in terms of semi-vertical angle. This enables the divergent pipe to be designed to be a small axial length, and the dimensions of the flow detector as a whole to be minimized.

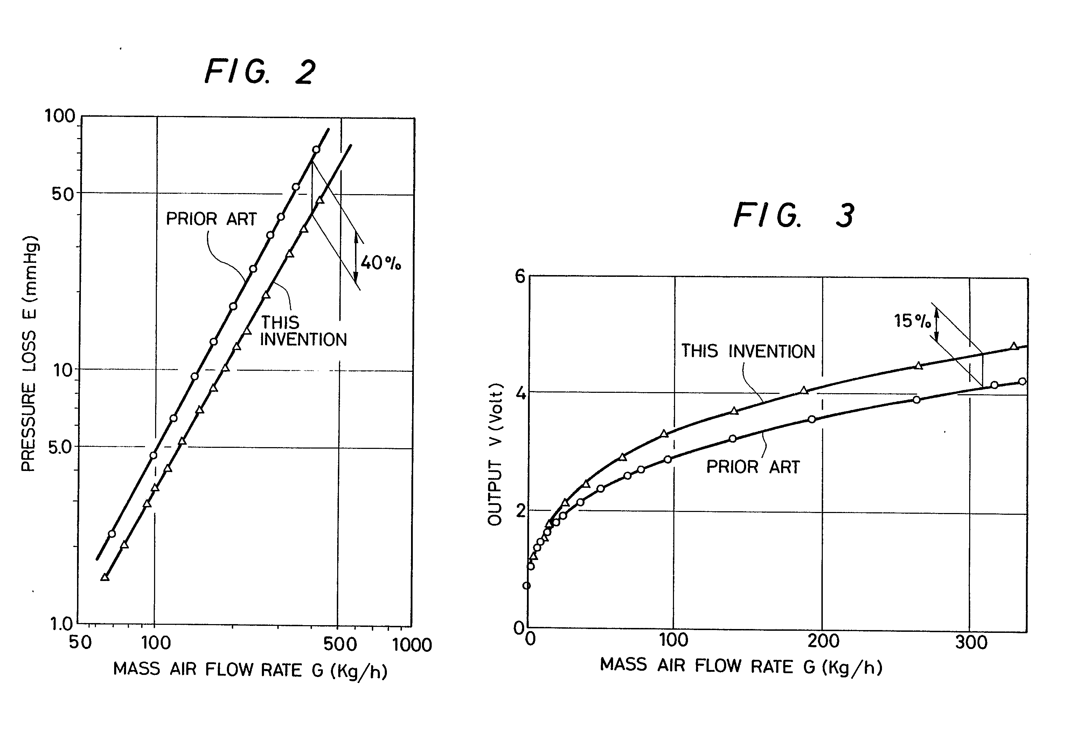

Fig. 2 is a graph showing the relation between a pressure loss and an air flow rate in the divergent pipe in the present invention in comparison with such relation in a conventional air flow rate detector (disclosed in USP 4366704).

The lateral axis represents a mass flow rate of the air, and the longitudinal axis a pressure loss, both of them being logarithmically shown.

According to the present invention, the air current which has passed through the bypass passage flows into the main air current in parallel therewith at the confluence port, so that a pressure loss can be reduced to a very low level. As may be clearly noted from the above-mentioned graph, the structure of the flow rate detector according to the present invention is capable of reducing a pressure loss by 40% as compared with that of a conventional air flow detector of this kind.

Fig. 3 shows the relation between the flow rate of the air current flowing in the bypass passage and an output voltage in the structure according to the present invention, and such relation in a conventional structure (disclosed in USP 4366704) of this kind. The lateral axis represents a mass flow rate of the air, and the longitudinal axis an output voltage.

According to the present invention, the air current which has passed through the bypass passage is guided smoothly from the confluence port into the main air passage. Therefore, the velocity of flow of the air current in the bypass passage increases as compared with that of the corresponding air current in the conventional structure, and an output voltage from the hot wire element in the present invention increases by about 15%. This means that the present invention has an increased measurement accuracy.

According to this embodiment, a pressure loss can be reduced, and the measurement accuracy can be improved.

In the flow rate detector according to the present invention described above, the confluence port at which the air current in the bypass passage joins the air current in the main air passage is formed so as to be opened in the axial direction. Accordingly, the air current which has passed through the bypass passage flows out in the axial direction of the main air passage to join the main air current smoothly, so that the main air current in the main air passage is not disturbed by the air current from the bypass passage. This enables a pressure loss to be reduced to an extremely low level. Since the air current in the bypass passage is guided smoothly into the main air passage, the velocity of flow in the bypass passage can be increased. Therefore, an output voltage can be increased, and the measurement accuracy can be improved.

## Claims

1. A bypass type flow rate detector, wherein a flow rate detecting means (4) is provided in a bypass passage (3) branching from a main air passage (2a, 2b), to detect the flow rate of the air flowing in said main air passage (2a, 2b), characterized in that said flow rate detector includes a confluence port - (3c) formed so as to be opened in the axial direction of said main air passage and join the air current in said bypass passage (3) to the one in said main air passage (2a, 2b).

2. A bypass type flow rate detector according to claim 1, wherein said confluence port (3c) is formed so as to be opened in the form of a narrow annular bore on the outer side of the outer circumferential portion of said main air passage (2a, 2c) and enable the air current from said confluence port (3c) to flow in parallel with the one in said main air passage.

3. A bypass type flow rate detector according to claim 2, wherein said confluence port (3c) is formed by extending a down-stream end of a venturi portion (1a) of said flow rate detector in the axial direction thereof, and fitting a downstream end portion in this extension into an opposed end portion of a flow rate detector body (1b) so that an axially-opened radial clearance is formed between the outer circumferential surface of the end portion of said extension and the opposed surface of the end portion of said detector body.

4. A bypass type flow rate detector according to claim 3, wherein the axial length of the overlapping portions of said venturi portion (1a) and said detector body (1b) which correspond to said confluence port is 1-2 mm.

5. A bypass type flow rate detector according to claim 3, wherein the angle of divergence of the portion of said main air passage (2b) which is on the downstream side of said venturi portion is 7°-10° in terms of semi-vertical angle.

6. A bypass type flow rate detector according to claim 1, wherein said flow rate detecting means (4) consists of a hot wire element.

7. A bypass type flow rate detector according to claim 1, wherein said flow rate detector (4) is used as a detector for measuring a flow rate of the air sucked into an internal combustion engine.

FIG. 1

FIG. 2

FIG. 3

0 232 710

| | DOCUMENTS CONSIDERED TO BE RELEVANT | | EP 87100144.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | AT - B - 57 029 (HUGUENIN) <br> * Fig. 2; page 2, lines 33-49 * | 1-3,5 | G 01 F 5/00 <br> G 01 F 1/68 |
| Y | | 6,7 | |
| A | | 4 | |
| | -- | | |
| Y | EP - A1 - 0 145 968 (HITACHI) <br> * Abstract; fig. 2 * | 6,7 | |
| | -- | | |
| X | US - A - 535 642 (THOMSON) <br> * Fig. 1 * . | 1-3,5 | |
| | ---- | | |

**TECHNICAL FIELDS SEARCHED (Int. Cl.4)**

G 01 F 1/00

G 01 F 5/00

The present search report has been drawn up for all claims

| Place of search <br> VIENNA | Date of completion of the search <br> 08-04-1987 | Examiner <br> BURGHARDT |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82